Europäisches Patentamt

European Patent Office

Office européen des brevets

(11) Publication number: **0 202 122 B1**

# EUROPEAN PATENT SPECIFICATION

(45) Date of publication of patent specification: **24.07.91**    (51) Int. Cl.⁵: **B60C 11/10, B60C 11/12**

(21) Application number: **86303681.0**

(22) Date of filing: **14.05.86**

(54) Pneumatic tire.

(30) Priority: **14.05.85 JP 100394/85**

(43) Date of publication of application:
**20.11.86 Bulletin 86/47**

(45) Publication of the grant of the patent:
**24.07.91 Bulletin 91/30**

(84) Designated Contracting States:
**CH DE GB LI**

(56) References cited:
**EP-A- 0 112 533        FR-A- 2 095 240
FR-A- 2 235 811        FR-A- 2 475 465
FR-A- 2 548 097        US-A- 3 115 919**

**PATENT ABSTRACTS OF JAPAN, vol. 9, no.
191 (M-402)[1914], 7th August 1985; & JP-
A-60 56 605 (YOKOHAMA GOMU K.K.)
02-04-1985**

(73) Proprietor: **Bridgestone Corporation
10-1, Kyobashi 1-Chome Chuo-Ku
Tokyo 104(JP)**

(72) Inventor: **Yamaguchi, Kojiro
1859-2, Izumi-Cho
Tokorozawa City Saitama Pref.(JP)**
Inventor: **Yamauchi, Makoto
14-401, Sayama Green Heights
212-14, Sasai, Sayama City Saitama Pref.(JP)**

(74) Representative: **Whalley, Kevin et al
MARKS & CLERK 57/60 Lincoln's Inn Fields
London WC2A 3LS(GB)**

## Description

This invention relates to a pneumatic tire, and more particularly to a pneumatic radial tire having a block type or rib block type tread pattern, and having an improved traction and braking performance.

All-season (or so-called all-weather) type tires generally have a block type tread pattern, wherein each block is provided with a plurality of slits each having such a narrow width as to close at the ground contact surface of the tire during running under load, for enhancing the traction force on snow. On the other hand, even in ordinary tires having block or rib block type tread patterns, substantially the same slits as described above are provided in order to mainly enhance the braking force on a wet road. Such a slit is usually called a sipe.

A tread pattern having an arrangement of sipes is well known. In general, the conventional sipe arrangements are divided into the so-called blind type independent of tread grooves comprising circumferential grooves and transverse grooves; separate type crossing an island portion of the tread and extending between circumferential grooves; and semi-blind type opening at only one end to a circumferential groove.

The present invention is directed to the aforementioned semi-blind type sipe arrangement. Heretofore, this type of the sipe has been regarded as a compromise between the blind type and the separate type in that there is no danger of excessively reducing the rigidity of the island portion in the tread, but still has disadvantages that it is insufficient to improve performance on snow in all-season tires or braking performance on wet roads in ordinary tires, and uneven wear is liable to be caused at the edge of the circumferential groove facing the sipe. A tyre according to the preamble of claim 1 is known, e.g. from EP-A-0112 533.

It is an aim of the invention to overcome or at least mitigate the above problems and to improve traction and braking performances without causing uneven wear at the island portion of the tread.

According to the invention, there is provided a pneumatic tire comprising a tread divided into island portions inclusive of at least one block row group by a plurality of circumferential Zig-Zag-grooves extending circumferentially of the tread and a plurality of transverse grooves crossing the circumferential grooves and extending toward the widthwise direction of the tread, and having a plurality of lateral sipes each being cut from a circumferential groove to the island portion at a depth substantially equal to or less than that of the circumferential groove; the said sipe being provided at its cut end with a radial escape hole having a circular shape in its cross section, a diameter in cross section corresponding to about 2,5-5 times the width of the sipe, and a depth equal to or deeper than the depth of the sipe.

By a lateral sipe there is meant a sipe having an inclination angle of not more than $45°$, preferably not more than $25°$ with respect to the rotational axis of the tire. Most preferably, the inclination angle is $0°$.

According to the invention, the escape hole has a size corresponding to at least 2.5 times, more preferably 3-5 times, the width of the sipe under a state free of internal pressure or the like. Further, the width of the sipe is preferably about 0.5 mm. Moreover, the depth of the sipe is preferably 0.5-1.0 times the depth of the circumferential groove.

The sipe arrangement according to the invention may be composed only of the aforementioned semi-blind type, or may be a combination with the blind type and/or the separate type.

The invention will be further described, by way of example only, with reference to the accompanying drawings, wherein:

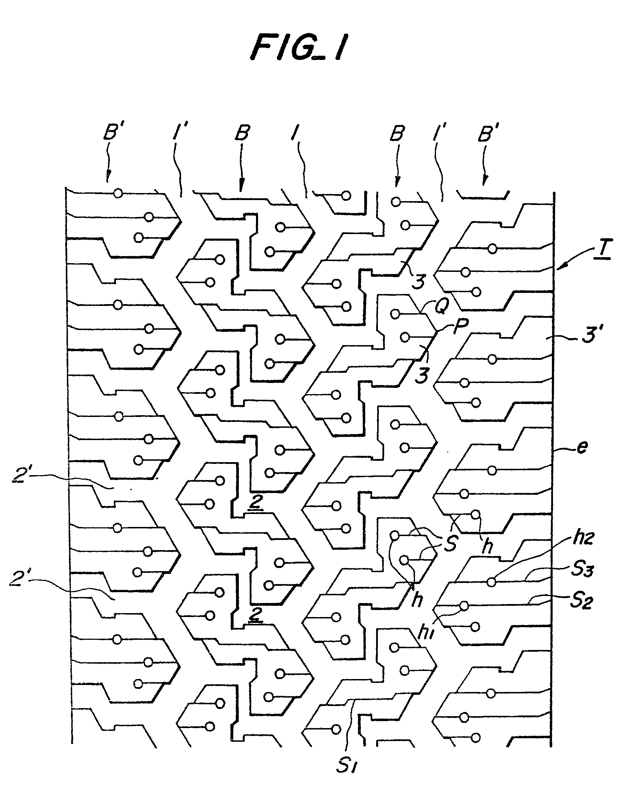

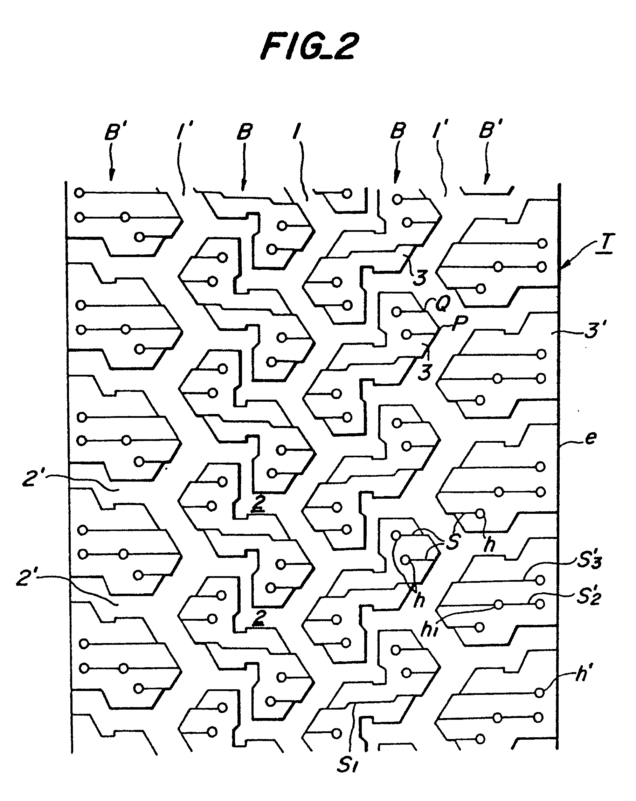

Figs. 1 and 2 are developed views of embodiments of tread patterns of pneumatic tires according to the invention, respectively.

In Fig. 1 is shown an embodiment of a block type tread pattern. In this figure, the tread surface T is divided into four block rows B, B' consisting of two central block rows B separated by a central main groove 1, and two edge block rows B' each separated from an adjacent central block row B by a respective main groove 1'. Transverse grooves 2, 2' cross with the grooves 1, 1' and extend along the widthwise direction of the tread in the form of a crank in the illustrated embodiment, the grooves 2 separating the block rows B and the grooves 2' separating the block rows B'.

Both the main grooves 1,1' may be of two-stage zigzag type as shown in the figure. In any case, they are formed as circumferential grooves extending circumferentially of the tread T other than both side regions together with the transverse grooves 2,2'. In this case, therefore, all the block row groups B, B' form island portions 3,3' of the tread. Moreover, a tread pattern including a so-called rib not divided by transverse grooves 2,2' as a tread island portion may advantageously be included.

The tread island portions or blocks 3,3' in this embodiment are provided with semi-blind sipes S cut from the vicinity of convex points P and concave points Q facing the circumferential grooves 1,1' as well as with crank type separate sipes $S_1$ dividing each block 3 of the central block row groups B and two separate

sipes $S_2$, $S_3$ separating each block 3' of both side block row groups B'. At the cut end of the semi-blind sipe S is formed an escape hole h having a size larger than the width of the sipe. Furthermore, it is desirable to form substantially the same escape holes $h_1$, $h_2$ at middle positions of the sipes $S_2$, $S_3$. Of course, it is possible to form escape holes at both cut ends of a blind sipe.

The escape holes h, $h_1$, $h_2$ have a size corresponding to not less than about 2.5 times, preferably 3-5 times, the width of the sipes S, $S_1$, $S_2$, $S_3$, which is generally about 2 mm because the width of the sipe is about 0.5 mm. In any case, it is necessary to determine the size of the escape hole based on the width of the sipe.

The depth of the escape holes h, $h_1$, $h_2$ is approximately equal to the depth of the main grooves 1, 1' since the depth of each sipe is substantially equal to or less than the depth of the main grooves 1, 1'. That is, the depth of the escape hole is preferably about 0.5-1.0 times the depth of the main groove, and is equal to or deeper than the depth of the sipe.

Fig. 2 is a modified embodiment of Fig. 1, wherein semi-blind sipes $S_2$' and $S_3$' are used instead of the separate sipes $S_2$ and $S_3$ at each block 3' of both side block row groups B'. In this case, each of the semi-blind sipes $S_2$' and $S_3$' is provided at its cut end with an escape hole h' having the same size as the escape hole h, and may be provided at its middle position with the same escape hole $h_1$ or $h_2$. The arrangement of the semi-blind sipes $S_2$', $S_3$' can enhance the rigidity at the outward end in the axial direction of the side block row group B'.

The escape hole h serves to make uniform the rigidity in the widthwise direction along the sipe of the block by the sipe cut from the circumferential groove to the escape hole, which contributes to avoid non-uniform deformation of the block along the sipe at the ground contact surface. That is, when traction force or braking force is applied to the block, the sipe is opened substantially in parallel and largely over the whole length thereof, so that the gripping performance is surprisingly enhanced as compared with the conventional type sipe. Furthermore, the escape hole acts to increase the traction force on snow and the braking force on a wet road surface together with maintaining the rigidity based on the uncut portion of the block without causing uneven wear. On the other hand, when lateral force is mainly applied to the block during cornering, the escape hole integrally acts with the block so as not to unnecessarily lower the rigidity of the block.

The invention will be further described with reference to the following illustrative Example.

A tread pattern shown in Fig. 1 was applied to an all-season tire having a size of 165 SR13.

The tire to be tested had a reinforcing structure as usual, wherein each of the sipes had a width of 0.5 mm and a depth corresponding to 0.7 times the depth of the circumferential groove. A control tire having no escape holes had the same structure.

The escape hole h was a circular hole having a diameter of 2 mm and a depth substantially equal to that of the circumferential groove.

The traction performance on snow and braking performance on wet road surface were evaluated with respect to the tire according to the invention and the control tire to obtain results as shown in the following table and represented by an index value on the basis that the result of the control tire is 100.

Moreover, the occurrence of uneven wear in the actual running test was measured to obtain results as shown in the table.

|  | Control tire | Present tire |
|---|---|---|
| Performance on snow | 100 | 110 |
| Wet performance | 100 | 110 |
| Uneven wear | partly occurred near the cut starting end of the sipe | no occurrence |

3

EP 0 202 122 B1

The improvement of the traction performance on snow of the tire according to the invention resulted from better deformation resistance, and the improved braking performance on wet road surface was realized by the uniform rigidity over substantially the whole cut length of the sipe without causing uneven wear of the tread.

## Claims

1. A pneumatic tire comprising a tread (T) divided into island portions (3,3') inclusive of at least one block row group (B,B') by a plurality of circumferential zig-zag grooves (1,1') extending circumferentially of the tread and a plurality of transverse grooves (2,2') crossing the circumferential grooves and extending toward the widthwise direction of the tread, and having a plurality of lateral sipes (S) each being cut from a circumferential groove (1,1') to the island portion (3,3') at a depth substantially equal to or less than that of the circumferential groove and provided at its cut end with a radial escape hole (h), characterized in that said escape hole (h) has a circular shape in its cross section, a diameter in cross section corresponding to about 2.5-5 times the width of the sipe (S), and a depth equal to or deeper than the depth of the sipe (S).

2. A pneumatic tire as claimed in claim 1, characterized in that the said sipe (s) has a depth corresponding to 0.5-1.0 times the depth of the circumferential groove (1,1').

## Revendications

1. Pneu comprenant une bande de roulement (T) divisée en portions d'îlot (3,3') qui comporte au moins un groupe d'une rangée de blocs (B,B'), par une pluralité de gorges circonférentielles en zig-zag (1,1') s'étendant circonférentiellement à la bande de roulement et une pluralité de gorges transversales (2,2') traversant les gorges circonférentielles et s'étendant vers la direction de la largeur de la bande de roulement, et présentant une pluralité de fentes latérales (S) chacune étant coupée à partir d'une gorge circonférentielle (1,1') vers la portion d'îlot (3,3') à une profondeur sensiblement égale à ou inférieure à celle de la gorge circonférentielle et pourvue à son extrémité de coupe d'un trou d'échappement radial (h), caractérisé en ce que ce trou d'échappement (h) présente une forme circulaire dans sa section transversale dont le diamètre correspond à environ 2,5-5 fois la largeur de la fente (S), et une profondeur égale ou supérieure à la profondeur de la fente (S).

2. Pneu selon la revendication 1, caractérisé en ce que ladite fente (S) a une profondeur correspondant à 0,5-1,0 fois la profondeur de ladite gorge circonférentielle (1,1').

## Patentansprüche

1. Luftreifen mit einer Lauffläche (T), die durch mehrere sich in Umfangsrichtung der Lauffläche erstreckende zickzackförmige Umfangsnuten (1, 1') und mehrere Quernuten (2, 2'), die die Umfangsnuten kreuzen und sich in Richtung der Laufflächenbreite erstrecken, in Profilblöcke (3, 3') einschließlich zumindest einer Profilblockreihe (B, B') unterteilt ist und eine Vielzahl querverlaufender Einschnitte (S) aufweist, die jeweils ausgehend von einer Umfangsnut (1, 1') in den Profilblock (3, 3') bis in eine Tiefe eingeschnitten sind, die im wesentlichen gleich oder kleiner als die der Umfangsnut ist, und an ihrem Einschnittende ein radial verlaufendes Austrittsloch (h) aufweisen,
dadurch **gekennzeichnet**, daß das Austrittsloch (h) einen kreisförmigen Querschnitt, einen dem ungefähr 2,5- bis 5-fachen der Breite des Einschnitts (S) entsprechenden Querschnittsdurchmesser und eine Tiefenerstreckung aufweist, die gleich oder größer der Tiefe des Einschnitts (S) ist.

2. Luftreifen nach Anspruch 1,
dadurch **gekennzeichnet**, daß der genannte Einschnitt (S) eine Tiefe aufweist, die dem 0,5-bis 1-fachen der Tiefe der Umfangsnut (1, 1') entspricht.

4

# FIG_1

# FIG_2